# EUROPÄISCHE PATENTANMELDUNG

(11) **EP 0 717 578 A2**
(43) Veröffentlichungstag der Anmeldung: **19.06.1996**
(21) Anmeldenummer: 95117336.8
(22) Anmeldetag: 03.11.1995
(51) Int. Cl.: H04Q 7/38, H04Q 7/24

(54) **Verfahren zur Anbindung von Teilnehmerstationen an ein Mobilfunksystem**

(30) Priorität: 14.12.1994 DE 4444621
(71) Anmelder: SIEMENS AKTIENGESELLSCHAFT, D-80333 München (DE)
(72) Erfinder: Nierhaus, Karl-Michael, Dipl.-Ing., D-81479 München (DE); Baumeister, Josef, Dipl.-Ing., D-46325 Borken (DE); Euscher, Christoph, Dipl.-Ing., D-46414 Rhede (DE)

(57) **Zusammenfassung**

Zur Anbindung von schnurlosen Teilnehmerstationen (DECTP) werden zugehörige Sicherheitsparameter (RD, UAK, DCK) und Sicherheitsalgorithmen, die jeweils für die Teilnehmer des Schnurlossystems (DECT-SS) vorgesehen sind, in der Authentifikationseinrichtung (AC) des Mobilfunksystems (GSM-MN) eingerichtet und diese Sicherheitsparameter (RD, UAK, DCK) sowie der von der schnurlosen Teilnehmerstation (DECTP) ermittelte Ausgangsparameter in denselben Nachrichten übertragen, die zur Übertragung der Sicherheitsparameter (z.B. RD) und des Ausgangsparameters (SRES) für die Mobilfunkteilnehmer des Mobilfunksystems (GSM-MN) vorgesehen sind. Damit können auch Teilnehmer eines Schnurlossystems im Mobilfunksystem authentifiziert und eine Zugangsberechtigung zu dem Mobilfunksystem über ihre schnurlosen Teilnehmerstationen erhalten.Die normalerweise für Schnurlossysteme geeigneten schnurlosen Teilnehmerstationen können quasi als mobile Teilnehmerstationen eines Mobilfunksystems aufgefaßt und behandelt werden.

## Beschreibung

Die Erfindung betrifft ein Verfahren zur Anbindung von Teilnehmerstationen an ein Mobilfunksystem gemäß dem Oberbegriff des Patentanspruchs 1.

Mobilfunksysteme, wie beispielsweise das europäische Mobilfunksystem nach dem GSM-Standard (Global System for Mobile Communication), verfügen über Sicherheitsvorkehrungen und Schutzfunktionen als Mittel zur Sicherheit und Vertraulichkeit auf dem Gebiet der Mobilkommunikation im privaten und geschäftlichen Bereich. Die Schutzfunktionen betreffen die Sicherheit während der Funkübertragung - beispielsweise den Schutz gegen Abhören - und die Geheimhaltung von Teilnehmerdaten der Mobilfunkteilnehmer des Mobilfunksystems - beispielsweise zum Schutz gegen unberechtigten Zugriff und Mißbrauch von teilnehmerindividuellen Informationen.

Einzelheiten der in einem GSM-Mobilfunksystem ergriffenen Maßnahmen zur Sicherheit und Vertraulichkeit sind in dem Aufsatz "Safety First bei europaweiter Mobilkommunikation", von J. Beheim, telcom report 16 (1993), Heft 6, Seiten 326 bis 329 beschrieben. Um einen Zugang zum Mobilfunksystem zu erreichen, muß für den jeweiligen Mobilfunkteilnehmer eine Teilnehmerauthentifikation, d.h. eine Überprüfung seiner Netzzugangsberechtigung, durchgeführt werden. Zu diesem Zweck weist das Mobilfunksystem eine zentrale Authentifikationseinrichtung auf, von der aus Sicherheitsparametern - wie einem individuellen Teilnehmerschlüssel und einer Zufallszahl - ein Ausgabeparameter ermittelt und an ein Besucherregister des Mobilfunksystems abgegeben wird.

Ebenso wird von der mobilen Teilnehmerstation des Mobilfunkteilnehmers aus entsprechenden Sicherheitsparametern ein weiterer Ausgangsparameter bereitgestellt und ebenfalls zum Besucherregister übertragen. Wenn beide Ausgangsparameter übereinstimmen, ist die Teilnehmerauthentifikation für den Mobilfunkteilnehmer erfolgreich abgeschlossen. Erst nach erfolgreich durchgeführter Authentifikation können Daten- und Informationsübertragungen im Mobilfunksytem stattfinden. Der jeweilige Ausgangsparameter wird in der mobilen Teilnehmerstation und in der Authentifikationseinrichtung anhand eines vorgegebenen Sicherheitsalgorithmus ermittelt, der jeweils die oben angegebenen Sicherheitsparameter als Eingangsparameter für die Berechtigungsüberprüfung gegenüber der mobilen Teilnehmerstation und gegenüber dem Mobilfunksystem benutzt.

Eine Mobilkommunikation kann nicht nur durch weiträumige, öffentliche, vorzugsweise zellular aufgebaute Mobilfunksysteme, sondern auch durch räumlich begrenzte, monozellulare Schnurlossysteme erzielt werden, die sowohl im privaten als auch im öffentlichen Bereich - wie beispielsweise in speziellen Ballungsgebieten mit festgelegter Fläche und hoher Verkehrsdichte - einer Vielzahl von Teilnehmern eine hohe Mobilität ermöglichen. Ein Schnurlossystem auf der Basis des DECT-Standards (Digital European Cordless Telecommunications) erlaubt digitale mobile Kommunikation über schnurlose Teilnehmerstationen und vereint die Vorteile eines europaweit geltenden Standards mit den Möglichkeiten der Digital- und Multiplextechnik. Ein derartiges DECT-Schnurlossystem verfügt ebenfalls über Sicherheitsvorkehrungen und Schutzfunktionen als Mittel zur Sicherheit und Vertraulichkeit der zu übertragenden Daten und Informationen. Eine Teilnehmerauthentifikation im Schnurlossystem findet ebenfalls statt, bei der Sicherheitsparameter durch entsprechende Übertragungsprotokolle zwischen der jeweiligen schnurlosen Teilnehmerstation und einer Basisstation des Schnurlossystems ausgetauscht werden.

Aufgabe der vorliegenden Erfindung ist es, ein Verfahren zur Anbindung von schnurlosen Teilnehmerstationen der Teilnehmer eines Schnurlossystems an ein Mobilfunksystem anzugeben, bei dem für die Teilnehmer über ihre schnurlosen Teilnehmerstationen eine Zugangsberechtigung zum Mobilfunksystem und den damit verbundenen Mobilitätsmechanismen über ein vorgelagertes Schnurlossystem erreicht werden kann.

Diese Aufgabe wird durch die Merkmale des Patentanspruchs 1 gelöst. Weiterbildungen der Erfindung sind in Unteransprüchen angegeben.

Demnach werden zur Anbindung von schnurlosen Teilnehmerstationen zugehörige Sicherheitsparameter und Sicherheitsalgorithmen, die jeweils für die Teilnehmer des Schnurlossystems vorgesehen sind, in der Authentifikationseinrichtung des Mobilfunksystems eingerichtet und diese Sicherheitsparameter sowie der von der schnurlosen Teilnehmerstation ermittelte Ausgangsparameter in denselben Nachrichten übertragen, die zur Übertragung der Sicherheitsparameter und des Ausgangsparameters für die Mobilfunkteilnehmer des Mobilfunksystems vorgesehen sind. Damit können auch Teilnehmer eines Schnurlossystems im Mobilfunksystem authentifiziert und eine Zugangsberechtigung zu dem Mobilfunksystem über ihre schnurlosen Teilnehmerstationen erhalten. Die normalerweise für Schnurlossysteme geeigneten schnurlosen Teilnehmerstationen können quasi als mobile Teilnehmerstationen eines Mobilfunksystems aufgefaßt und behandelt werden.

Somit können Vorteile eines bestehenden Schnurlossystems, wie z.B. Bewältigung hoher Verkehrsdichten, niedriger Stromverbrauch der schnurlosen Teilnehmerstationen, Realisierbarkeit mono- und multizellularer Systeme mit Vorteilen eines Mobilfunksystems, wie z.B. ausgereifte Mobilitätsmechanismen unabhängig vom Aufenthaltsort der jeweiligen Teilnehmer, weite Ausdehnung der Mobilkommunikation über Landesgrenzen hinweg, durch Anbindung schnurloser Teilnehmerstationen quasi als mobile Teilnehmerstationen in einer vereinten Schnurlossystem/Mobilfunksystem-Architektur kombiniert werden.

Gemäß einer Weiterbildung der Erfindung umfassen die in der Authentifikationseinrichtung des Mobilfunksystems für die Teilnehmer des Schnurlossystems gespeicherten Sicherheitsparameter, aus denen der Ausgangsparameter zur Überprüfung der Zugangsberechtigung ermittelt wird, einen individuellen Teilnehmerschlüssel gegen unberechtigten Zugriff.

Gemäß einer anderen Weiterbildung der Erfindung wird in der Authentifikationseinrichtung des Mobilfunksystems für die Teilnehmer des Schnurlossystems ein Parameter als Sicherheitsparameter gespeichert, der nach erfolgreicher Zugangsberechtigung zur Verschlüsselung der über die Luft zu den schnurlosen Teilnehmerstationen übertragenen Informationen und Daten verwendet wird.

Dabei ist es von Vorteil, wenn nach der Übertragung verschlüsselter Informationen und Daten über die Luft eine Meldung über die ausgeführte Verschlüsselung vom Schnurlossystem an das Mobilfunksystem rückübertragen wird.

Es ist weiterhin von Vorteil, wenn die von der schnurlosen Teilnehmerstation und von der Authentifikationseinrichtung ermittelten Ausgangsparameter jeweils im Besucherregister des Mobilfunksystems auf Übereinstimmung verglichen werden.

Die Erfindung wird anhand eines in den Figuren dargestellten Ausführungsbeispiels näher erläutert. Im einzelnen zeigen
- Figur 1: das Blockschaltbild einer kombinierten DECT-Schnurlossystem/GSM-Mobilfunksystem-Architektur und
- Figur 2: die im DECT-Schnurlossystem und im GSM-Mobilfunksystem übertragenen Nachrichten zur Teilnehmerauthentifikation und Verschlüsselung der in der Luft zu den schnurlosen Teilnehmerstationen übertragenen Daten und Informationen.

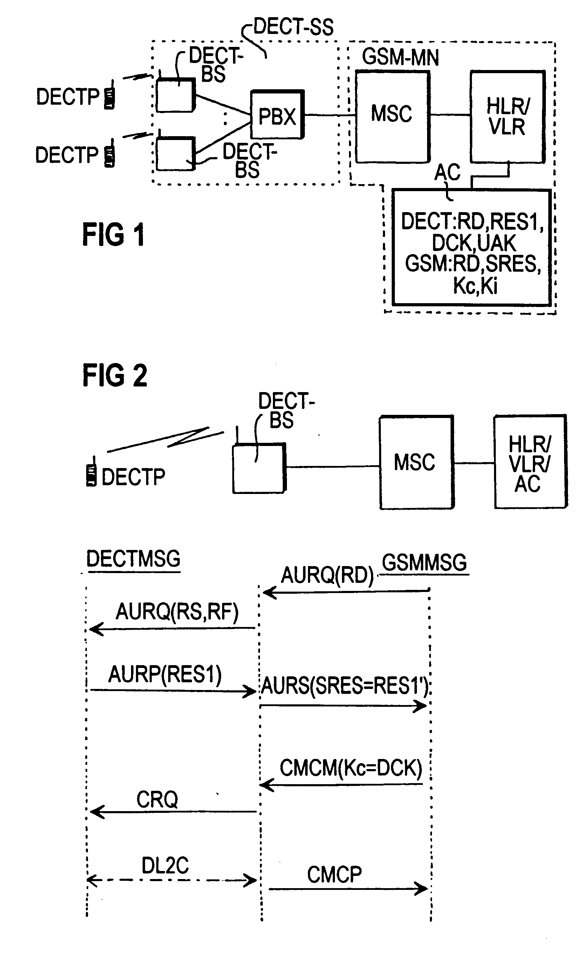

Die Anbindung eines Schnurlossystems an ein Mobilfunksystem sei anhand der europaweit genormten Standards DECT (Digital European Cordless Telecommunications) und GSM (Global System for Mobile Communication) für mobile Kommunikation erläutert. Anstelle dieser digitalen Systeme können auch analoge und/oder nicht standardisierte Mobilfunksysteme durch vorgeschaltete Schnurlossysteme gemäß der Erfindung unterstützt werden. Figur 1 zeigt ein nach dem Standard DECT ausgebildetes Schnurlossystem DECT-SS, das an ein nach dem Standard GSM arbeitendes Mobilfunksystem GSM-MN angeschlossen ist, um die für das weiträumig ausgebildete, öffentliche zellulare Mobilfunksystem vorliegenden Mobilitätsmechanismen (Location Update, Authentifikation, Teilnehmeridentifizierung usw.) für die mit dem Schnurlossystem DECT-SS verbundenen Teilnehmer - nachfolgend als DECT-Teilnehmer bezeichnet - nutzen zu können.

Das Schnurlossystem DECT-SS, das selbstverständlich als Subsystem auch mehrfach vorhanden sein kann, weist mehrere Basisstationen DECT-BS und eine lokale Vermittlungseinrichtung PBX auf, an die jeweils die Basisstationen DECT-BS angeschlossen sind. An Stelle der lokalen Vermittlungseinrichtung PBX könnte auch eine gemeinsame Basisstationssteuereinrichtung (Base Station Controller) mit den Basisstationen DECT-BS verbunden sein. Über eine transparente Luftschnittstelle ist jede Basisstation DECT-BS des Schnurlossystems DECT-SS mit einer schnurlosen Teilnehmerstation DECTP eines DECT-Teilnehmers verbunden. Der für die Mobilkommunikation im geschäftlichen und privaten Bereich ausgerichtete DECT-Standard umfaßt einen umfangreichen Protokollvorrat einschließlich Sicherheitsvorkehrungen für eine eindeutige Identifizierung des Teilnehmers im Schnurlossystem, für eine hohe Abhörsicherheit und für eine Teilnehmerauthentifikation zur Überprüfung der Zugangsberechtigung des Teilnehmers zu dem Schnurlossystem.

Für den Fall, daß der DECT-Teilnehmer mit seiner schnurlosen Teilnehmerstation DECTP im Schnurlossystem DECT-SS verbleibt, folglich kein Zugang zum Mobilfunksystem GSM-MN gewünscht wird, meldet er sich mit einer ihm zugehörigen Teilnehmeridentifikation im Schnurlossystem DECT-SS an. Die Authentifikation im Schnurlossystem DECT-SS ohne Anbindung an ein Mobilfunksystem erfolgt mit Hilfe von Sicherheitsparametern, die jeweils zwischen der schnurlosen Teilnehmerstation DECTP des Teilnehmers und der für ihn zuständigen Basisstation DECT-BS über Nachrichten ausgetauscht werden. Im Schnurlossystem werden festgelegte Algorithmen ausgeführt, um den DECT-Teilnehmer in der lokalen Vermittlungseinrichtung PPX oder in der gemeinsamen Basisstationssteuereinrichtung zu authentifizieren.

Wenn der DECT-Teilnehmer sich quasi als "Mobilfunkteilnehmer" über seine schnurlose Teilnehmerstation DECTP anmeldet, was eine Verwendung der schnurlosen Teilnehmerstation DECTP als mobile Teilnehmerstation bewirkt, findet die Teilnehmerauthentifikation außer in der schnurlosen Teilnehmerstation DECTP auch noch im Mobilfunksystem GSM-MN statt. Bei einem Mobilfunksystem GSM-MN mit vorgeschaltetem Schnurlossystem DECT-SS wird der DECT-Teilnehmer zunächst in seiner schnurlosen Teilnehmerstation DECTP anhand einer für ihn definierten Identifikationsnummer (International Portable User Identity, IPUI) und mit einer lokale Gültigkeit anzeigenden temporären Identifikationsnummer (Temporary Portable User Identity, TPUI) versehen.

Die für den Teilnehmer festgelegte Identifikationsnummer (IPUI) enthält bei Anbindung des Schnurlossystems die für das Mobilfunksystem typische internationale Mobilfunkteilnehmeridentität (International Mobile Subscriber Identity, IMSI). Darüber hinaus verfügt die schnurlose Teilnehmerstation DECTP über eine Zugriffsinformation (Portabel Access Right Key, PARK), die dem DECT-Teilnehmer zusammen mit der internationalen Identifikationsnummer (IPUI) einen Zugriff auf das Mobilfunksystem über seine schnurlose Teilnehmerstation ermöglicht. Diese Zugriffsinformation wird in der für den Teilnehmer verantwortlichen Basisstation DECT-BS des Schnurlossystems DECT-SS mit mindestens einer die Zugriffsberechtigung des Teilnehmers kennzeichnenden Information (Primary/ Secondary/Tertiary Access Right Key) verglichen und bei Übereinstimmung seine Teilnehmeridentifikationsnummer an die lokale Vermittlungseinrichtung PBX übertragen. Dies bedeutet, daß der DECT-Teilnehmer als GSM-Mobilfunkteilnehmer in der lokalen Vermittlungseinrichtung PBX eingebucht wird, um darüber Gespräche aufbauen zu können.

Das an das Schnurlossystem DECT-SS angeschlossene Mobilfunksystem GSM-MN weist mehrere Mobilvermittlungsstellen MSC mit zugehörigen Besucherregistern VLR, mindestens ein Heimatregister HLR und eine zentral angeordnete Authentifikationseinrichtung AC auf. Die Mobilvermittlungsstellen MSC übernehmen im Mobilfunksystem die vermittlungstechnischen Aufgaben zur Herstellung eines Verbindungsaufbaus für abgehende und ankommende Anrufe von Mobilfunkteilnehmern in einem vorgegebenen Aufenthaltsgebiet (MSC Area) des zellular strukturierten Mobilfunksystems. Die Besucherregister VLR speichern die Teilnehmerdaten der in diesem Aufenthaltsgebiet sich aktuell befindenden Mobilfunkteilnehmer vorübergehend, während das Heimatregister HLR die Teilnehmerdaten aller im Mobilfunksystem eingerichteten Mobilfunkteilnehmer enthält. Das Heimatregister HLR speichert auch Informationen darüber, welches Besucherregister VLR gerade für den vom Anruf betroffenen Mobilfunkteilnehmer zuständig ist.

Üblicherweise werden die für den Mobilfunkteilnehmer erforderlichen Teilnehmerdaten vom jeweils zuständigen Besucherregister VLR bereitgestellt. Ebenso wie sich die Mobilfunkteilnehmer gegenüber ihren mobilen Teilnehmerstationen durch entsprechende Teilnehmeridentifikationsnummern und persönliche Identifikationsnummern ausweisen müssen, ist auch eine Überprüfung der Zugangsberechtigung zum Mobilfunksystem durch die Teilnehmerauthentifikation notwendig. Daher wird der GSM-Mobilfunkteilnehmer in der Authentifikationseinrichtung AC mit einer ihm zugewiesenen Teilnehmeridentifikationsnummer (Mobile Subscriber Identity, MSIN) registriert und ein geheimer Teilnehmerschlüssel Ki für ihn abgespeichert. Der individuelle Teilnehmerschlüssel Ki ist einer von mehreren Sicherheitsparametern, die Eingangsparameter eines Sicherheitsalgorithmus zum Schutz gegen unberechtigten Zugriff im Mobilfunksystem GSM-MN bilden. Weitere Sicherheitsparameter sind eine Zufallszahl RD, die von einem in der Authentifikationseinrichtung AC angeordneten Zufallsgenerator erzeugt wird, sowie ein Schlüssel Kc zum Verschlüsseln der Informationen und Daten während der Funkübertragung über die Luft. Zur Authentifikation des Mobilfunkteilnehmers ist in der Authentifikationseinrichtung AC ein Sicherheitsalgorithmus (A3/A8) implementiert, durch den aus den Eingangsparametern Ki und RD ein Ausgangsparameter SRES zum Überprüfen der Netzzugangsberechtigung gebildet wird.

Um die Teilnehmerauthentifikation bei einem Anschluß des Schnurlossystems DECT-SS an das Mobilfunksystem GSM-MN auch für DECT-Teilnehmer zu gewährleisten, werden in der Authentifikationseinrichtung AC die für das Schnurlossystem DECT-SS vorgesehenen Sicherheitsalgorithmen implementiert und dabei die erforderlichen Sicherheitsparameter als Eingangsparameter zur Erzeugung eines entsprechenden Ausgangsparameters zum Überprüfen der Zugangsberechtigung von DECT-Teilnehmern zum Mobilfunksystem GSM-MN gespeichert. Die für die DECT-Teilnehmer vorgesehenen Sicherheitsparameter bestehen aus der Zufallszahl RD, aus einem Schlüssel DCK zum Verschlüsseln der auf der Luftschnittstelle zu übertragenden Informationen und Daten und aus einem individuellen Teilnehmerschlüssel UAK.

Aus den Eingangsparametern RD und DCK ergibt sich durch Anwendung des geeigneten DECT-Sicherheitsalgorithmus ein Ausgangsparameter RES1. Die Überprüfung der Zugangsberechtigung erfolgt im Mobilfunksystem GSM-MN dadurch, daß der von der schnurlosen Teilnehmerstation DECTP anhand des DECT-Sicherheitsalgorithmus ermittelte Ausgangsparameter mit dem von der Authentifikationseinrichtung AC anhand desselben DECT-Sicherheitsalgorithmus ermittelten Ausgangsparameter RES1 auf Übereinstimmung verglichen wird. Der Vergleich erfolgt z.B. in dem Besucherregister VLR, zu dem die beiden Ausgangsparameter übertragen werden.

Im Mobilfunksystem GSM-MN mit angebundenem Schnurlossystem DECT-SS werden zur Teilnehmerauthentifikation die jeweiligen Sicherheitsparameter -Eingangsparameter wie Ausgangsparameter - in Nachrichten des jeweiligen Standards DECT bzw. GSM nach definierten Übertragungsprotokollen übermittelt. Wegen der Kompatibilität der Art der Teilnehmerauthentifikation ("Challenge-Response"-Verfahren oder "Signed-Response"-Verfahren durch Ermittlung jeweils eines Ausgangsparameters in der Teilnehmerstation und in der Authentifikationseinrichtung mit anschließendem Vergleich) und der Parameterlängen bei beiden Standards kann die Anbindung des Schnurlossystems DECT-SS an das Mobilfunksystem GSM-MN und damit die Verwendung der schnurlosen Teilnehmerstationen DECTP als mobile Teilnehmerstationen ohne Änderung bestehender Protokolle durchgeführt werden.

Figur 2 zeigt die zwischen den Einrichtungen des Schnurlossystems und des Mobilfunksystems ablaufenden Nachrichtenübertragungen, die Authentifizierungsnachrichten DECTMSG im Schnurlossystem und Authentifizierungsnachrichten GSMMSG im Mobilfunksystem betreffen. Bevor der DECT-Teilnehmer Zugang zum Mobilfunksystem erhält, wird von dessen Besucherregister VLR zur Überprüfung der Zugangsberechtigung zunächst eine Authentifikationsanforderung AURQ über die angeschaltete Mobilvermittlungsstelle MSC ausgelöst. Dabei wird mit der Authentifikationsanforderung AURQ die von der Authentifikationseinrichtung AC bereitgestellte Zufallszahl RD zum Schnurlossystem übertragen. Die von der zuständigen Basisstation DECT-BS empfangene Authentifikationsanforderung AURQ wird an die schnurlose Teilnehmerstation DECTP des DECT-Teilnehmers als Authentifikationsanforderung AURQ' weitergeleitet, indem die aus zwei Byte bestehende Zufallszahl RD in zwei Teilzufallszahlen RS und RF aufgeteilt und nacheinander übertragen werden.

Der von der schnurlosen Teilnehmerstation DECTP anhand der eintreffenden Teilzufallszahlen RS und RF und anhand des für den DECT-Teilnehmer gespeicherten individuellen Teilnehmerschlüssels (UAK) ermittelte Ausgangsparameter RES1' wird in einer Authentifikationsantwort (AURP) (auch bezeichnet als "Challenge-Response" oder "Signed-Response") zur Basisstation DECT-BS über die Luftschnittstelle übertragen. In einer im Mobilfunksystem definierten Authentifikationsantwort AURS, die üblicherweise von den mobilen Teilnehmerstationen der Mobilfunkteilnehmer bei der Durchführung der Teilnehmerauthentifikation empfangen wird, wird der von der schnurlosen Teilnehmerstation DECTP abgegebene Ausgangsparameter RES1' wie der Ausgangsparameter SRES einer mobilen Teilnehmerstation zu der Mobilvermittlungsstelle MSC und von dort zum Besucherregister VLR übermittelt.

Zur Überprüfung der Zugangsberechtigung des DECT-Teilnehmers zum Mobilfunksystem liefert der in der Authentifikationseinrichtung AC implementierte DECT-Sicherheitsalgorithmus ebenfalls einen Ausgangsparameter RES1 (siehe Figur 1), der zum Besucherregister VLR übertragen und dort mit dem von der schnurlosen Teilnehmerstation DECTP berechneten Ausgangsparameter RES1' verglichen wird. Stimmen die Werte der beiden ermittelten Ausgangsparameter RES1' und RES1 überein, ist die Teilnehmerauthentifikation für den DECT-Teilnehmer bei Anbindung des Schnurlossystems an das Mobilfunksystem erfolgreich verlaufen.

Nach der Authentifikation des DECT-Teilnehmers kann eine Verschlüsselung der über die Luft zu sendenden Informationen - Sprache und Daten sowie Signalisierungsinformationen - durchgeführt werden. Zu diesem Zweck wird über die Mobilvermittlungsstelle MSC ein Verschlüsselungsbefehl CMCM zu der Basisstation DECT-BS übertragen. Dabei enthält der Verschlüsselungsbefehl CMCM einen zur Verschlüsselung notwendigen Sicherheitsparameter DCK, der im Mobilfunksystem als ein nach dem GSM-Standard im Mobilfunksystem zu übertragender Schlüssel Kc aufgefaßt und zu der Basisstation DECT-BS übertragen wird.

Auf Grund des in der Basisstation DECT-BS eintreffenden Verschlüsselungsbefehls CMCM, wird eine Verschlüsselungsanforderung CRQ an die schnurlose Teilnehmerstation DECTP gerichtet, mit der die Verschlüsselung der über die Luft zu übertragenden Informationen und Daten angeregt wird. Auf beiden Seiten der Luftschnittstelle wird mit ein- und demselbem festgelegten Algorithmus verschlüsselt, dessen Eingangs- und Ausgangsparameter festgelegt sind. Die auf der Luftschnittstelle zwischen der schnurlosen Teilnehmerstation DECTP und der Basisstation DECT-BS in beiden Richtungen verschlüsselt übertragenen Nachrichten DL2C zeigen der Basisstation DECT-BS eine erfolgreiche Verschlüsselung der Informationen und Daten an, worauf von der Basisstation DECT-BS an die Mobilvermittlungsstelle MSC eine Meldung CMCP über die Ausführung der Verschlüsselung rückgemeldet wird.

Somit ist auch bei einer Anbindung der schnurlosen Teilnehmerstationen DECTP eines Schnurlossystems quasi als mobile Teilnehmerstationen an ein Mobilfunksystem vollzogen, ohne daß an den standardisierten Übertragungsprotokollen zur Übertragung der für die verschiedenen Algorithmen erforderlichen Parameter im Mobilfunksystem mit vorgeschaltetem Schnurlossystem etwas zu verändern ist. Auf diese Weise können übliche DECT-Endgeräte als schnurlose Teilnehmerstationen für den Zugriff auf das Mobilfunksystem eingesetzt werden, um die Vorteile des weiträumig ausgedehnten zellular aufgebauten Mobilfunksystems zu nutzen. An Stelle des DECT-Schnurlossystems und des GSM-Mobilfunksystems gemäß dem Ausführungsbeispiel können auch ein anderes Schnurlossystem und/oder ein anderes Mobilfunksystem verwendet werden.

## Patentansprüche

1. Verfahren zur Anbindung von Teilnehmerstationen an ein Mobilfunksystem (GSM-MN), bei dem Sicherheitsparameter (RD, Ki, Kc) zur Überprüfung der Berechtigung von Mobilfunkteilnehmern für den Zugang zum Mobilfunksystem (GSM-MN) in einer zentralen Authentifikationseinrichtung (AC) gespeichert und als Eingangsparameter für Sicherheitsalgorithmen verwendet werden, und bei dem die Zugangsberechtigung durch Vergleich eines Ausgangsparameters (SRES) überprüft wird, der jeweils von der Authentifikationseinrichtung (AC) und der Teilnehmerstation anhand desselben Sicherheitsalgorithmus ermittelt wird,
**dadurch gekennzeichnet,**
daß zur Anbindung von schnurlosen Teilnehmerstationen (DECTP) der Teilnehmer eines Schnurlossystems (DECT-SS) zugehörige Sicherheitsparameter (RD, UAK, DCK) und Sicherheitsalgorithmen zur Überprüfung der Zugangsberechtigung der Teilnehmer des Schnurlossystems (DECT-SS) in der Authentifikationseinrichtung (AC) des Mobilfunksystems (GSM-MN) eingerichtet werden und daß im Mobilfunksystem die für die schnurlosen Teilnehmerstationen (DECTP) eingerichteten Sicherheitsparameter (z.B. RD) und der von der schnurlosen Teilnehmerstation (DECTP) jeweils ermittelte Ausgangsparameter (RES1') in denselben Nachrichten (AURQ, AURS) übertragen werden, die zur Übertragung der Sicherheitsparameter (z.B. RD) und des Ausgangsparameters (SRES) für die Mobilfunkteilnehmer des Mobilfunksystems (GSM-MN) vorgesehen sind.

2. Verfahren nach Anspruch 1,
**dadurch gekennzeichnet,**
daß in der Authentifikationseinrichtung (AC) des Mobilfunksystems (GSM-MN) für die Teilnehmer des Schnurlossystems (DECT-SS) jeweils ein individueller Teilnehmerschlüssel (UAK) gegen unberechtigten Zugriff als Sicherheitsparameter gespeichert wird.

3. Verfahren nach Anspruch 1 oder 2,
**dadurch gekennzeichnet,**
daß in der Authentifikationseinrichtung (AC) des Mobilfunksystems (GSM-MN) für die Teilnehmer des Schnurlossystems (DECT-SS) ein Parameter (DCK) als Sicherheitsparameter gespeichert wird, der nach erfolgreicher Zugangsberechtigung zur Verschlüsselung der über die Luft zu den schnurlosen Teilnehmerstationen (DECTP) übertragenen Informationen und Daten verwendet wird.

4. Verfahren nach Anspruch 3,
**dadurch gekennzeichnet,**
daß nach der Übertragung der verschlüsselten Informationen und Daten über die Luft eine Meldung (CMCP) über die ausgeführte Verschlüsselung vom Schnurlossystem (DECT-SS) an das Mobilfunksystem (GSM-MN) rückübertragen wird.

5. Verfahren nach einem der vorhergehenden Ansprüche,
**dadurch gekennzeichnet,**
daß die von der schnurlosen Teilnehmerstation (DECTP) und von der Authentifikationseinrichtung (AC) ermittelten Ausgangsparameter (RES1', RES1) jeweils im Besucherregister (VLR) des Mobilfunksystems (GSM-MN) auf Übereinstimmung verglichen werden.
